**Europäisches Patentamt**

**European Patent Office**

**Office européen des brevets**

(19)

(11) Publication number : **0 506 266 A2**

(12) **EUROPEAN PATENT APPLICATION**

(21) Application number : **92302197.6**

(22) Date of filing : **13.03.92**

(51) Int. Cl.⁵ : **G01F 23/18**

(30) Priority : **23.03.91 GB 9106211**

(43) Date of publication of application :
**30.09.92 Bulletin 92/40**

(84) Designated Contracting States :
**DE ES FR GB IT**

(71) Applicant : **FORD MOTOR COMPANY LIMITED**
**Eagle Way**
**Brentwood Essex (GB)**
(84) **GB IT**

(71) Applicant : **FORD-WERKE**
**AKTIENGESELLSCHAFT**
**Werk Köln-Niehl Henry-Ford-Strasse Postfach**
**60 40 02**
**W-5000 Köln 60 (DE)**
(84) **DE**

(71) Applicant : **FORD FRANCE S. A.**
**B.P. 307**
**F-92506 Rueil-Malmaison Cédex (FR)**
(84) **FR**

(71) Applicant : **FORD MOTOR COMPANY**
**County of Wayne**
**Dearborn, MI 48164 (US)**
(84) **ES**

(72) Inventor : **Bowman, Timothy John**
**12 Vicarage Road**
**Bexley, Kent DA5 2AL (GB)**

(74) Representative : **Messulam, Alec Moses et al**
**A. Messulam & Co., 24 Broadway**
**Leigh on Sea, Essex SS9 18N (GB)**

(54) **Low liquid level warning system.**

(57)    A liquid level warning system is described for a liquid reservoir 10 from which liquid is drawn by a pump 12 delivering metered quantities of the liquid.

The warning system comprises a sensing switch 14 for sensing the liquid level in the reservoir and an indicator 32 for providing a first warning signal when the liquid level drops below a first predetermined value. Additionally means 20 are provided for estimating the quantity of liquid drawn by the pump 12 after commencement of the first warning signal and means 22-30 for modifying the output signal of the indicator 32 in dependence upon the estimated quantity of liquid remaining in the reservoir.

EP 0 506 266 A2

## Field of the invention

The present invention relates to a warning system to advise the driver of a vehicle of the level of a liquid, such as the oil level or the fuel level.

## Background of the invention

Two stroke engines are known which are not lubricated by mixing oil with the fuel but by supplying accurately metered quantities of oil to the bearings in the crankcase by means of a positive displacement pump. With such engines, if no oil is available for lubrication, the engine can seize and be severely damaged. It is therefore important to ensure that the level of oil in the oil reservoir is monitored at all times and to give the vehicle driver ample warning of a drop in oil level.

To this end, it is known to provide two oil level warning lights, the first giving advance warning to replenish the oil reservoir and the second advising the driver to switch off the engine immediately to prevent it from being damaged.

There are several disadvantages in using a system with two different level sensors and lights. First, there is the cost arising from the duplication. Second, the vehicle dashboard must be modified to accommodate an extra warning light and an additional wire must be included in the wiring harness for this purpose. If a manufacturer is to offer a vehicle with a choice of two stroke and four stroke engines, this would require the different variants of the same model to have different electrical systems.

Furthermore, it can cause confusion to the driver to have two warning lights for the same liquid level and this may even suggest to the driver that the early warning can safely be disregarded.

## Object of the invention

The invention seeks to provide a liquid level warning system which mitigates the foregoing disadvantages and in particular which dispenses with the need to modify the dashboard and the wiring harness.

## Summary of the invention

According to the present invention, there is provided a liquid level warning system for a liquid reservoir from which liquid is drawn by a pump delivering metered quantities of the liquid, comprising means for sensing the liquid level in the reservoir and an indicator for providing a first warning signal when the liquid level drops below a first predetermined value, characterised by means for estimating the quantity of liquid drawn by the pump after commencement of the first warning signal and means for modifying the output signal of the indicator in dependence upon the output of the estimating means.

The invention uses a single level sensor and indicator, which may be a light bulb or a sound generator. The level sensor may be the same as that conventionally used to provide an early warning. Then, instead of monitoring the liquid level by means of a second sensor, the remaining quantity of oil is derived by subtracting the amount of oil estimated to have been drawn from the reservoir by the pump from the amount of oil remaining when the low level warning indication first occurred. As the liquid level approaches more dangerously low levels, the indication provided to the driver is modified to indicate the increasing urgency to replenish the reservoir.

In the case of a two stroke engine, the oil to the bearings is provided by a solenoid actuated positive displacement pump which delivers the same amount of oil in each operating cycle. The quantity of oil drawn from the reservoir can therefore be estimated by counting the number of pulses applied to the solenoid of the pump.

The invention is not however restricted to this application and can, for example, be used to indicate the quantity of fuel left in a tank supplying a fuel injected spark ignited or diesel engine. In the case of a spark ignited engine, the quantity of fuel is determined by the length of time that the injectors are open and it is possible to integrate the pulses applied to the injectors in order to estimate the quantity of fuel used.

In the case of a diesel engine with a mechanical pump, it is especially important to avoid running out of fuel in order to prevent air from entering the fuel lines and the fuel injection pump. In this case, the quantity of fuel drawn from the tank can be estimated by integrating the product of the number of engine cycles and a signal representing the position of the lever which sets the quantity of fuel injected during each cycle.

The warning signal given by the indicator, which is typically a warning light, can be modified in an any desired way to indicate the increasing urgency of the need to replenish the reservoir. Conveniently, the light may be arranged to flicker at an ever increasing repetition frequency as the liquid level is calculated to have dropped. Preferably, the light is arranged to remain on permanently when danger is imminent.

In the case of an oil warning light, it is possible to arrange for the same indicator light to remain on permanently to warn of a breakdown of the oil pump or of any other cause of loss of oil at the bearings.

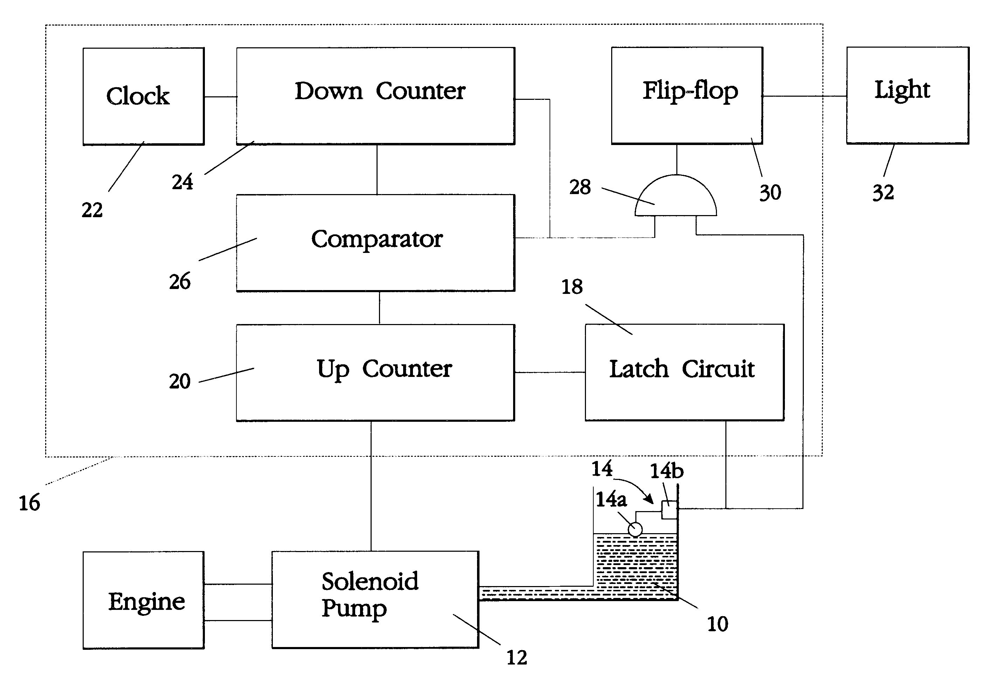

## Brief description of the drawing

The invention will now be described further, by way of example, with reference to the accompanying drawing which is a schematic representation of a warning system of the invention.

## Description of the preferred embodiment

A reservoir 10 contains oil for lubricating a two stroke internal combustion engine. Oil is drawn from the reservoir 10 by a solenoid operated positive displacement pump 12 which supplies the oil under pressure directly to the bearings of the crankshaft.

A level sensing switch 14 acts to produce a signal when the oil in the reservoir 10 drops below a first predetermined level. The sensing switch 14 may of any desired type, for example it may, as shown, comprise a float 14a connected to a lever which operates a micro-switch 14b.

Instead of being used to switch on a warning light directly, the output of the sensing switch 14 is applied to a circuit generally designated 16 which provides the driver with a more meaningful signal, to warn of the low oil level in the reservoir 10.

The signal from the sensing switch 14 is applied to a latch circuit 18. The output of this circuit 18 goes high after a signal has been produced continuously by the sensing switch 14 for more than a certain time. This delay is to ensure that a warning signal is not produced by a temporary variation in the liquid level caused by movement of the vehicle. The signal remains high until the oil in the reservoir 10 is replenished and the signal at the output of the sensor 14 disappears.

As soon as the output signal of the latch circuit 18 goes high, a counter 20 is reset. Thereafter the counter counts the energising pulses applied to the solenoid of the valve 12. The count developed in the counter 20 represents the amount of oil drawn by the pump after the threshold level of the switch 14 has been reached and as this count increases the oil level approaches a danger level at which the reservoir is totally empty and the engine risks seizing.

A clock 22 produces pulses at a fixed rate and these are supplied to a down counter 24. The output of the counters 20 and 24 are compared in a comparator 26 and when the count of the counter 24 is equal to or less than that of the counter 20, the output signal of the comparator goes high. This output acts first to reset the down counter 24 and is passed by an AND gate 28 to a flip-flop 30 acting as a one shot multivibrator which produces a pulse of predetermined duration for energising an indicator light 32. The AND gate ensures that the indicator light 32 can only be switched on when the oil has dropped below the threshold level of the sensor switch 14.

Immediately after the oil level drops, the count in counter 20 will be low. The down counter 24 will take several cycles of the clock 22 to reach this value and therefore the comparator 26 will produce output pulses infrequently and the indicator light 32 will flash with low repetition frequency.

As the count in the up counter 20 increases, with more oil being drawn from the reservoir 10, less time is taken for the counter 24 to count down during each cycle and the pulse repetition frequency will increase. When the count in the counter 20 reaches the value of the count to which the counter 24 is reset, then the indicator light will remain permanently on to warn of imminent danger.

It will be clear that various modifications can be made to this circuit. For example, one may use analogue integration techniques instead of the digital counters described above. Indeed, a micro-computer may be used to implement the functions described in software rather than hardware.

It will clear also that the invention may be applied to fuel reservoirs rather than oil reservoirs and that it may be used even when the pump is not actuated electrically. Thus, in a diesel engine, the engine revolutions may be used to gate to a counter a value representing the position of the fuel setting lever of a mechanical injection pump. In the case of a fuel injected spark ignited engine, a count may be developed to indicate the integral of the time that the injection nozzles are open.

## Claims

1. A liquid level warning system for a liquid reservoir (10) from which liquid is drawn by a pump (12) delivering metered quantities of the liquid, comprising means (14) for sensing the liquid level in the reservoir (10) and an indicator (32) for providing a first warning signal when the liquid level drops below a first predetermined value, characterised by means (20) for estimating the quantity of liquid drawn by the pump after commencement of the first warning signal and means (22,24,26,28,30) for modifying the output signal of the indicator (32) in dependence upon the output of the estimating means (20).

2. A warning system as claimed in claim 1, wherein the liquid reservoir (10) is an oil reservoir for a two stroke internal combustion engine from which oil is delivered to engine bearings by means of a solenoid actuated positive displacement pump (12) delivering the same amount of oil in each operating cycle, the estimating means (20) being operative to count the actuations of the pump solenoid (12) in order to estimate the total quantity of oil drawn from the reservoir (10) after the oil level has dropped below said first predetermined value.

3. A warning system as claimed in claim 1, wherein the liquid reservoir (10) is a fuel tank for a spark ignited engine from which tank fuel is supplied by way of injectors for combustion in the engine, and wherein the estimating means is operative to integrate the opening times of the fuel injectors in order to estimate the total quantity of fuel drawn from the tank after the fuel level has dropped below said first predetermined value.

4. A warning system for as claimed in claim 1, wherein the liquid reservoir (10) is a fuel tank for a diesel engine with a mechanical pump, and wherein the estimating means is operative to integrate the product of the number of engine cycles and a signal representing the position of the lever which sets the quantity of fuel injected during each cycle.

5. A warning system as claimed in any preceding claim, wherein the indicator (32) is an intermittently operated light and wherein the flicker rate of the light is varied in dependence upon the estimated quantity of liquid remaining in the reservoir (10).

6. A warning system as claimed in claim 5, wherein the light (32) is operative to remain permanently energised when the level of the liquid in the reservoir is estimated to have dropped below a second predetermined value.